# EUROPEAN PATENT APPLICATION

(11) **EP 3 462 323 A1**
(43) Date of publication of application: **03.04.2019**
(21) Application number: 18197110.2
(22) Date of filing: 27.09.2018
(51) Int. Cl.: G06F 12/02, G06F 3/06, G06F 12/04

(54) **DISCONTIGUOUS STORAGE AND CONTIGUOUS RETRIEVAL OF LOGICALLY PARTITIONED DATA**

(30) Priority: 28.09.2017 US 201715719092
(71) Applicant: Hewlett Packard Enterprise Development LP, Houston, TX 77070 (US)
(72) Inventor: PARK, James Hyungsun, Palo Alto, CA 94304-1100 (US); KUNO, Harumi, Palo Alto, CA 94304-1100 (US); CHABBI, Milind M., Palo Alto, CA 94301-1112 (US); GUY, Wey Yuan, Redmond, WA 98052 (US); JOHNSON, Charles Stuart, Palo Alto, CA 94301-1112 (US); TRAN, Tuan, San Jose, CA 95111 (US); SCHERER, William N., Houston, TX 77070 (US); BYRNE, John L., Pasadena, CA 91105 (US); FELDMAN, Dan, Palo Alto, WA 94304-1100 (US)
(74) Representative: Haseltine Lake LLP

(57) **Abstract**

A memory region has logical partitions. Each logical partition has data packages. The memory region discontiguously stores the data packages of the logical partitions. A writing process can discontiguously generate the data packages of the logical partitions. A reading process can contiguously retrieve the data packages of a selected logical partition.

## Description

### BACKGROUND

Data is a hallmark of modern computing systems. Specifically, on the one hand, data can be written, generated, or produced, and subsequently stored. On the other hand, the stored data can be subsequently read or retrieved, and then consumed (i.e., utilized). Computing processes, which are executing instances of computer programs, can just write data, can just read data, or can both write and read data.

A process can be made up of one or more threads, which can be sequences of programmed instructions that can be simultaneously executed. Data can be written to a memory region by one process, therefore, and concurrently or at a later time read from the memory region by a different or the same process.

Writing processes operate most efficiently when they can write data as independently as possible, without synchronization with one another. For example, each writing process may write the data to its own memory buffer, for subsequent storage to a memory region. By comparison, a reading process reads data most efficiently if the data is effectively retrieved as if the data had been stored in a contiguous manner, regardless of how the data was produced (i.e., regardless of which writing process generated each piece of data), and how the data is indeed stored (i.e., contiguously or discontiguously).

Therefore, maximizing data writing efficiency is at odds with maximizing data reading efficiency. If multiple writing processes each write data to its own memory buffer to maximize writing efficiency, then a reading process cannot read the data with maximum efficiency, because the data is not contiguously stored in the order in which each piece of data was created (or in another order). On the other hand, if the writing processes have to contiguously write the data in order of creation (or in another order) to maximize subsequent reading efficiency by the reading process, then writing efficiency is affected because the writing processes have to synchronize with one another when contiguously storing data in the same memory region.

### BRIEF DESCRIPTION OF THE DRAWINGS

FIG. 1 is a diagram of an example of discontiguous data storage over logical partitions of a memory region and contiguous data retrieval of a selected logical partition from the memory region.
FIG. 2 is a diagram of another example of discontiguous data storage over logical partitions of a memory region and contiguous data retrieval of a selected logical partition from the memory region.
FIG. 3 is a diagram of an example system architecture that can implement the discontiguous data writing and storage and contiguous data retrieval of FIGs. 1 and 2.
FIG. 4 is a flowchart of an example method for discontiguously writing data to a memory region, regardless of the logical partitions to which the data belong.
FIG. 5 is a flowchart of an example method for contiguously reading data of a selected logical partition from a memory region.

### DETAILED DESCRIPTION

Techniques described herein permit writing processes to generate data discontiguously, while also permitting reading processes to read the data contiguously. Specifically, a memory region is partitioned into logical partitions, with the memory region discontiguously storing data over the logical partitions. A writing process can thus generate data for storage within the partitions in a discontiguous manner. However, a reading process can nevertheless retrieve the data of a selected logical partition in a contiguous manner, even though the memory region stores this data discontiguously with respect to the other logical partitions.

As generally described herein, data that is contiguous in memory refers to data that is stored in one contiguous memory region without any other intervening data. Conversely, data that is discontiguous in memory refers to data that is stored as fragments in different memory regions.

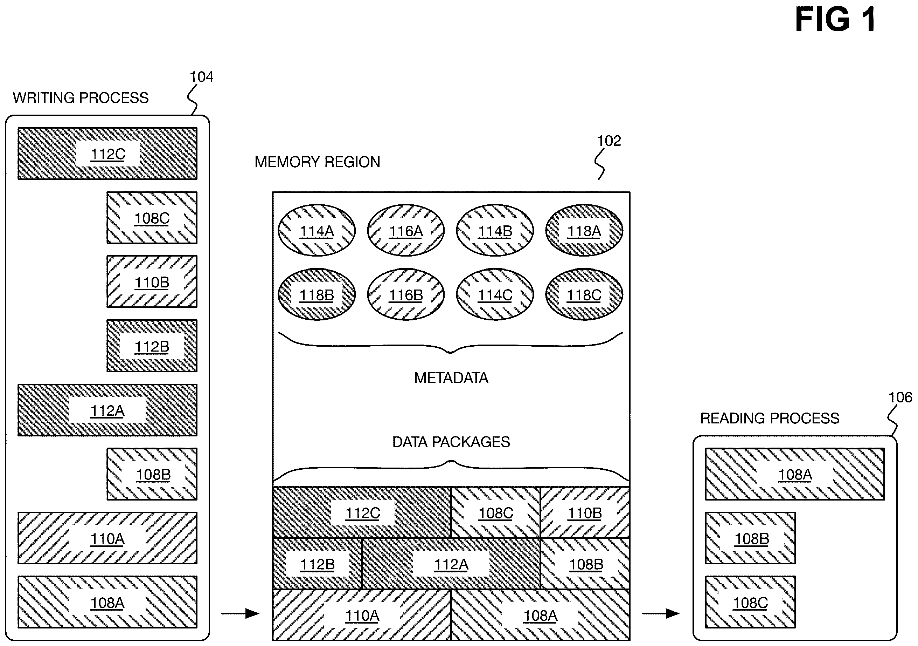

FIG. 1 shows an illustrative example of discontiguous data storage over logical partitions and contiguous data retrieval of a selected logical partition. A memory region 102 discontiguously stores logically partitioned data packages that a writing process 104 discontiguously generates, and which a reading process 106 contiguously retrieves for a selected logical partition. The processes 104 and 106 can be the same or different processes. The processes 104 and 106 can be concurrently executing, or may consecutively execute or execute in an interleaved manner. For instance, the writing process 104 may discontiguously generate at least some of the logically partitioned data, which the reading process 106 contiguously retrieves for a selected logical partition, before the writing process 104 discontiguously generates more logically partitioned data that the reading process 106 then contiguously retrieves for the selected logical partition.

In FIG. 1, the writing process 104 generates in order data packages 108A, 110A, 108B, 112A, 112B, 110B, 108C, and 112C. The data packages 108A, 108B, and 108C are collectively referred to as the data packages 108 and belong to a first logical partition. The data packages 110A and 110B are collectively referred to as the data packages 110 and belong to a second logical partition. The data packages 112A, 112B, and 112C are collectively referred to as the data packages 112 and belong to a third logical partition. Each data package 108, 110, and 112 can be of a variably arbitrary size, as depicted in FIG. 1, or the data packages 108, 110, and 112 can be of a statically identical size.

The writing process 104 writes the data packages 108, 110, and 112 to the memory region 102 discontiguously, in the order in which the process 104 generates the packages 108, 110, and 112. That is, the writing process 104 does not collect the data packages 108 of the first logical partition and contiguously write them to the memory region 102 prior to collecting the data packages 110 of the second logical partition and contiguously writing them to the region 102. Permitting the writing process 104 to so discontiguously write the data packages 108, 110, and 112 to the memory region 102 as the packages 108, 110, and 112 are generated, without regard to how the packages 108, 110, and 112 are logically partitioned, maximizes efficiency (i.e., performance) of writing the packages 108, 110, and 112 to the memory region 102.

At the memory region 102, the data packages 108, 110, and 112 are discontiguously stored as the packages 108, 110, and 112 are received from the writing process 104, without regard to how the packages 108, 110, and 112 are logically partitioned. For instance, the memory region 102 may store each of the data packages 108, 110, and 112 in the first available memory location thereof that is sufficiently large to accommodate a currently received data package 108, 110, or 112, as each package 108, 110, or 112 is received. As depicted in the example of FIG. 1, then, the data packages 108, 110, and 112 can be stored in the memory region 102 in the order in which the writing process 104 generates the data packages 108, 110, and 112.

The memory region 102 stores metadata for each data package 108, 110, and 112. Specifically, the memory region 102 stores metadata 114A, 114B, and 114C for the data packages 108A, 108B, and 108C, respectively, which are referred to as the metadata 114. The memory region 102 stores metadata 116A and 116B for the data packages 110A and 110B, respectively, which are referred to as the metadata 116. The memory region 102 stores metadata 118A, 118B, and 118C for the data packages 112A, 112B, and 112C, respectively, which are referred to as the metadata 118. Each of the metadata 114, 116, and 118 stores for a corresponding data package 108, 110, or 112, the logical partition of the corresponding data package, the starting location within the memory region 102 at which this data package is stored, and if the data packages 108, 110, and 112 are of variably arbitrary size, the length or size of the corresponding package.

The memory region 102 thus has logical partitions over which the region 102 stores the data packages 108, 110, and 112, in that the region 102 maintains the assignments of the packages 108, 110, and 112 to the logical partitions within metadata 114, 116, and 118. The memory region 102 is not physically partitioned and thus does not have physical partitions because the actual location of the data packages 108, 110, and 112 within the memory region 102 does not depend on which partition each package 108, 110, or 112 has been assigned. The memory region 102 likewise discontiguously stores the logically partitioned data packages 108, 110, and 112. This is because the data packages 108 of the first logical partition are not (purposefully) contiguously stored within the region 102; the packages 110 of the second partition are not (purposefully) contiguously stored within the region 102, and the packages 112 of the third partition are not (purposefully) contiguously stored. Rather, the memory region 102 stores the data packages 108 in available locations thereof as the writing process 104 generates or writes the packages 108 to the memory region 102.

However, the reading process 106 retrieves or reads the data packages 108, 110, or 112 of a selected logical partition from the memory region 102 contiguously in order. In the example of FIG. 1, the reading process 106 contiguously retrieves the data packages 108 of the first logical partition in order, without reading the data packages 110 and 112 of the respective second and third logical partitions. The reading process 106 can read the data packages 108 of the selected (first) logical partition in the order in which the writing process 104 generates the packages 108, as depicted in the example of FIG. 1. However, more generally, the reading process 106 may retrieve the data packages of a selected logical partition in a different order than the order in which the packages have been generated.

In the example of FIG. 1, then, the reading process 106 contiguously reads the data packages 108 of the first logical partition from the memory region 102 in the order in which the writing process 104 generated and wrote the packages 108 to the region 102. The reading process 106, in other words, retrieves the data packages 108 of the first logical partition as if the packages 108 were contiguously stored in the memory region 102, even though the data packages 108 are not contiguously stored in the region 102. As such, the reading process 106 receives the data package 108A first, followed by the data package 108B, and followed then by the data package 108C. Permitting the reading process 106 to so contiguously read the data packages 108, 110, or 112 of a selected or desired logical partition from the memory region 102 as if the packages in question were contiguously stored in the region 102 as a physical partition maximizes efficiency (i.e., performance) of reading the desired logically partitioned data packages from the memory region 102.

In the example of FIG. 1, there is one writing process 104 and one reading process 106. As to reading processes 106, there can be multiple such processes 106 that concurrently or non-concurrently execute. For example, each reading process 106 can retrieve the data packages 108, 110, or 112 of the same or a different logical partition, concurrently with the other reading process 106, or non-concurrently. As to writing processes 104, there also can be multiple such processes 106. Concurrent execution can be as has been described in relation to FIG. 1, where one writing process 104 first writes to the memory region 102, followed by another writing process 104 writing to the region 102, and so on. In this example, it can be said that there is one instance of the memory region 102 that multiple writing processes 104 share.

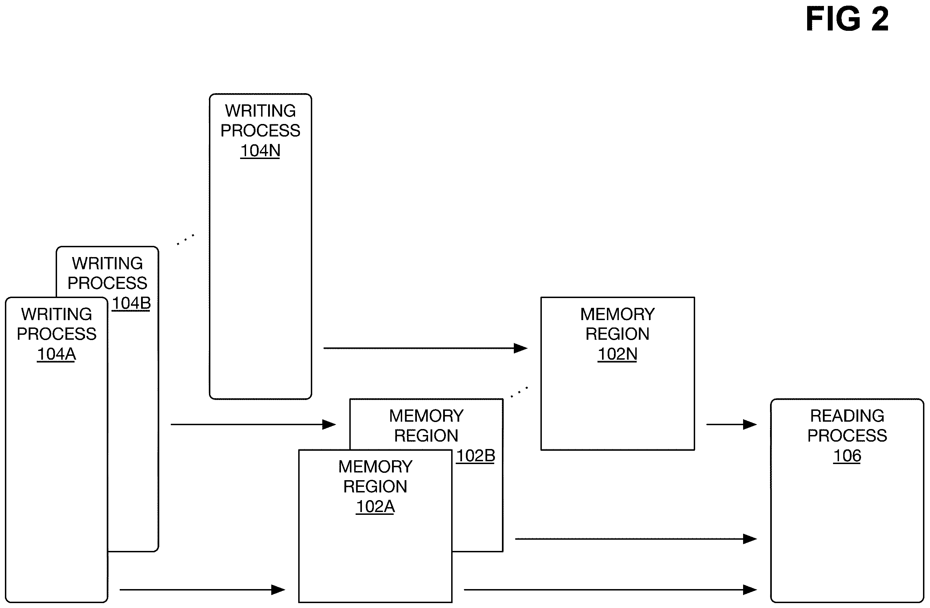

FIG. 2 shows an illustrative example of discontiguous data storage over logical partitions and contiguous data retrieval of a selected logical partition, in which there are multiple, concurrently executing writing processes 104. Rather than one writing process 104 as in FIG. 1, there are multiple writing processes 104A, 104B, ..., 104N, which are collectively referred to as the writing processes 104. Rather than one instance of a memory region 102 as in FIG. 1, there are multiple instances of the memory region 102A, 102B, ... , 102N, which are collectively referred to as the instances of the memory region 102. As in FIG. 1, there is one reading process 106, but there can be more than one reading process 106, as described above in relation to FIG. 1.

Each writing process 104 corresponds to a different instance of the memory region 102. For example, the writing process 104A has a corresponding instance of the memory region 102A, the writing process 104B has a corresponding instance of the memory region 102B, and so on. Each writing process 104 discontiguously writes to its corresponding instance of the memory region 102 as has been described above in relation to FIG. 1. Likewise, each instance of the memory region 102 discontiguously stores data over logical partitions of each instance of the memory region 102 as has been described above in relation to FIG. 1. The instances of the memory region 102 can each have the same logical partitions, such as the same three logical partitions described in FIG. 1.

Because each writing process 104 has its own corresponding instance of the memory region 102, the writing processes 104 can concurrently generate and write logically partitioned data packages to the instances of the memory region 102, without synchronization and without the need for coherency. When the reading process 106 contiguously reads the data packages of a selected logical partition, the reading process 106 contiguously retrieves, in order, the data packages of this logical partition regardless of the instances of the memory region 102 the data packages are stored. That is, from the perspective of the reading process 106, the data packages are stored for contiguous consumption in the instances of the memory region 102 as a whole.

For example, the reading process 106 may read the data packages of a selected logical partition in the order in which the packages were generated by the writing processes 104. As such, the reading process 106 retrieves the first generated package of this logical partition regardless of which instance of the memory region 102 stores this package (and thus regardless of which writing process 104 generated the package). The reading process 106 then retrieves the next generated package of the logical partition again regardless of which instance of the memory region 102 stores this package (and also thus regardless of which writing process 104 generated the package). In this way, multiple writing processes 104 can concurrently discontiguously write logically partitioned data packages to (corresponding multiple instances of) the memory region 102, and a reading process 106 can contiguously retrieve the data packages, in order, from (the multiple instances of) the region 102. The memory region 102 can include multiple related logical partitions, which may be intended for the same reading process 106.

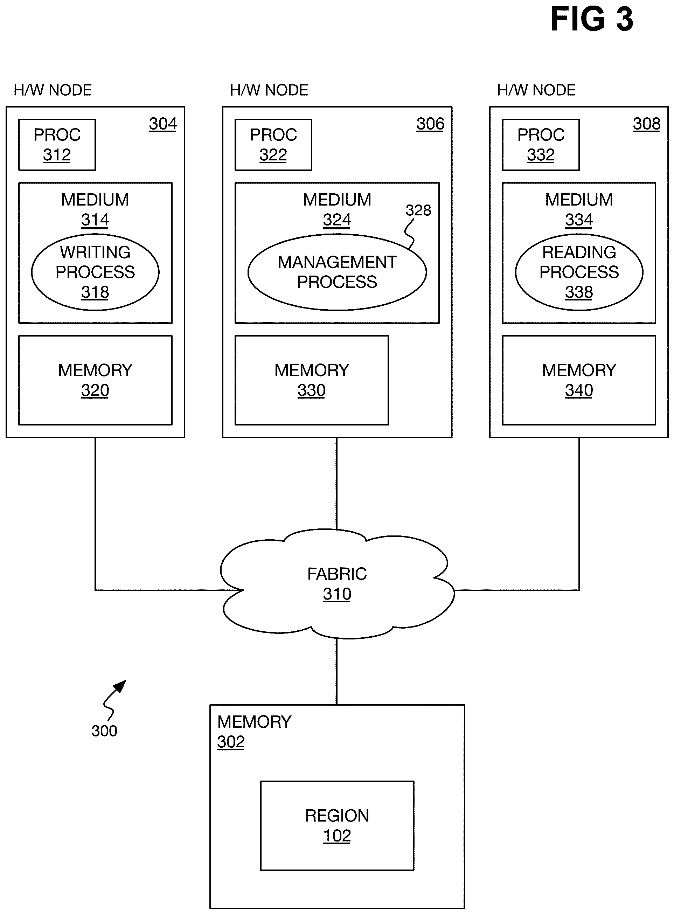

FIG. 3 shows an example system architecture 300 that can implement the discontiguous data writing and storage and contiguous data retrieval of FIGs. 1 and 2. The system architecture 300 includes memory 102 and hardware nodes 304, 306, and 308, which are each connected to a network fabric 310. The network fabric 310 can be a fibre channel (FC) network fabric, a peripheral component interconnect (PCI) express (PCIe) network fabric, or another type of network fabric. The memory 302 can be fabric-attached memory (FAM), such as fabric-attached non-volatile memory (FANVM), and is shared and accessible by each of the hardware nodes 304, 306, and 308.

The hardware nodes 304, 306, and 308 may each be a computing device, such as a blade server computing device, another type of server computing device, or another type of computing device. In the example of FIG. 3, the hardware node 304 executes a writing process 318, the hardware node 306 executes a management process 328, and the hardware node 308 executes a reading process 338. There can be more than one of each type of hardware node 304, 306, and 308. Furthermore, the hardware node 304 may in particular execute a reading process in addition to the writing process 318, and the hardware node 308 may in particular execute a writing process in addition to the reading process 338.

The hardware node 304 includes a processor 312, a non-transitory computer-readable data storage medium 314, and a memory 320. The storage medium 314 may store program code that realizes the writing process 318 when executed by the processor 312. The memory 320 may be dynamic random-access memory (DRAM), and can be private to the hardware node 304, such that the other hardware nodes 306 and 308 cannot access the memory 320.

The hardware node 306 may in one implementation be disposed between the memory 302 and the network fabric 310, instead of the memory 302 being directly connected to the fabric 310. The hardware node 306 also includes a processor 322, a non-transitory computer-readable data storage medium 324, and a memory 330. The storage medium 328 may store program code that realizes the management process 328 when executed by the processor 322. The management process 328 may expose one or more application programming interfaces (APIs), for instance, which the writing process 318 and the reading process 338 of the hardware nodes 304 and 308, respectively, call to write to and read from the memory 302. The memory 330 may be DRAM, and can be private to the hardware node 306, such that the other hardware nodes 304 and 308 cannot access the memory 330.

The hardware node 308 may also include a processor 332, a non-transitory computer-readable data storage medium 334, and a memory 340. The storage medium 334 may store program code that realizes the reading process 338 when executed by the processor 332. The memory 340 may be DRAM, and can be private to the hardware node 308, such that the other nodes 304 and 306 cannot access the memory 340.

In operation, the writing process 318 discontiguously generates logically partitioned data packages for storage within the memory region 102 of the memory 302. As the writing process 318 generates the data packages, the process 318 can tag each data package with the logical partition to which it belongs. The data packages may be temporarily buffered within the memory 320. By calling an API exposed by the management process 328, the writing process 318 causes the management process 328 to receive the logically partitioned data packages from the hardware node 304, and discontiguously store the data packages within the memory region 102 of the memory 302. The management process 328 in this respect generates metadata for each data package, and stores the metadata within the memory region 102, to identify each data package's logical partition. The data packages that are written to and stored at the memory region 102 can be of arbitrary sizes, as noted above, in correspondence with their sizes as the writing process 318 generates the packages.

In operation, the reading process 338 contiguously retrieves data packages of a selected logical partition that have been stored within the memory region 102 of the memory 302. Specifically, by calling an API exposed by the management process 328, the reading process 338 causes the management process 328 to retrieve just the data packages of the selected logical partition from the memory 302, and contiguously store or write them in a given order within the memory 340 of the hardware node 308 executing the reading process 338. The reading process 338 thus effectively receives the data packages of the selected logical partition contiguously, by reading the packages from the memory 340 of the hardware node 308.

The management process 328 of the hardware node 306 thus manages discontiguous storage of the logically partitioned data packages to the memory region 102 of the memory 302 responsive to the writing process 318 of the hardware node 304 discontiguously generating the data packages. The management process 328 also manages contiguous conveyance of the data packages of a selected logical partition to the reading process 338 of the hardware node 308 responsive to the reading process 338 contiguously reading the data packages of the selected logical partition. As noted above, the management process 328 may expose APIs that the writing process 318 calls to write data to the memory region 102 and that the reading process 338 calls to read data from the memory region 102.

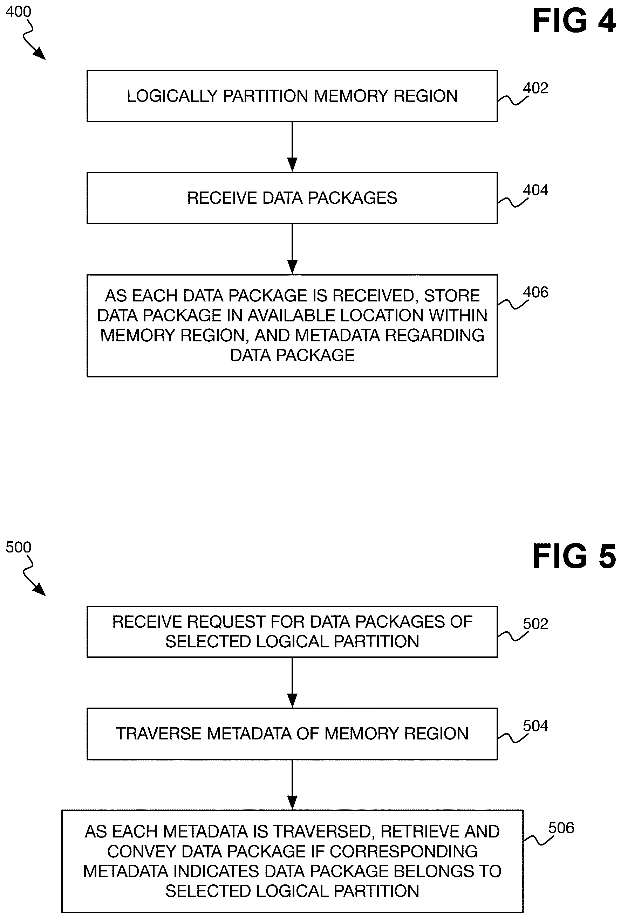

FIG. 4 shows an example method 400 for discontiguously writing data to a memory region. The method 400 can be performed by the management process 328 of the hardware node 306, responsive to the writing process 318 of the hardware node 304 calling an API exposed by the management process 328, for instance. The method 400 can be implemented as program code stored on a non-transitory computer-readable data storage medium and executable by a processor.

A memory region is logically partitioned into logical partitions (402), prior to the writing of data to the memory region. When the memory region is subsequently written to, data packages are received in temporal order (i.e., in the order in which they were generated or otherwise written) (404). Each data package is tagged with the logical partition to which it belongs. As each data package is received, the data package is stored within an available location within the memory region regardless of the logical partition to which the data package belongs (406). Metadata regarding the data package is also stored within the memory region. The metadata references where the data package is stored within the memory region, and indicates the logical partition to which the data package belongs.

In receiving data packages in part 404, the method 400 can receive data packages from different, multiple writing processes that are each responsible for writing to the logical partitions of the memory region. In such instance, the data packages from each writing process can be stored in an instance of the memory region corresponding to the writing process and reserved for exclusive use of the writing process. In a different implementation, the data packages from the writing processes can be stored in the same instance of the memory region.

Furthermore, in writing the data packages within an available location within the memory region in part 406, rather than storing the data package itself, the method 400 may instead store a pointer to data of the data package as stored outside of the memory region. For example, a writing process may have already stored the data package in a different memory. Rather than also storing the data of the data package in the memory region in part 406, the method 400 can store a pointer to where the writing process stored the data package, as provided by the writing process.

FIG. 5 shows an example method 500 for contiguously reading data of a selected logical partition of a memory region. The method 500 can be performed by the management process 328 of the hardware node 306 of FIG. 3, responsive to the reading process 338 of the hardware node 308 calling an API exposed by the management process 328, for instance. The method 500 can be implemented as program code stored on a non-transitory computer-readable data storage medium and executable by a processor.

A request for data packages of a selected logical partition of a memory region is received (502). In response, the metadata of the memory region are traversed (504). As each metadata is traversed, responsive to determining that the metadata is for a data package belonging to the selected logical partition, the data package is retrieved and conveyed (506). For instance, the retrieved data packages having metadata indicating that they belong to the selected logical partition may be contiguously stored in the private memory 340 of the hardware node 308 on which the reading process 338 that requested the data packages of this logical partition is running.

The metadata of the memory region may be traversed in the (temporal) order in which the data packages were stored within the memory region. The data packages may themselves be stored within the memory region discontiguously, without regards to the logical partitions to which they belong. However, because just the data packages that belong to the selected partition are retrieved, these data packages can be conveyed contiguously in the same (temporal) order.

The techniques that have been described maximize writing and reading efficiency with respect to partitioned data. Writing efficiency is maximized because data can be written discontiguously, regardless of the logical partitions to which the data belong. Reading efficiency is maximized because data of a selected partition can nevertheless be read contiguously, even though the data may be discontiguously stored in relation to the data of the other partitions.

## Claims

1. A system comprising:
a memory region having a plurality of logical partitions, each logical partition having a plurality of data packages, the memory region discontiguously storing the data packages of the logical partitions;
a first hardware node to execute a writing process to generate the data packages of the logical partitions discontiguously; and
a second hardware node to execute a reading process to retrieve the data packages of a selected logical partition contiguously.

2. The system of claim 1, wherein the memory region discontiguously stores the data packages of the logical partitions in that the data packages of each logical partition are not contiguously stored within the memory region.

3. The system of claim 1, wherein the memory region stores, for each data package, metadata indicating the logical partition to which the data package belongs.

4. The system of claim 3, wherein as the writing process generates the data packages, the writing process tags each data package with the logical partition to which the data package belongs, as the metadata and, optionally, wherein when the reading process retrieves the data packages of the selected logical partition, the reading process receives the data packages that have been tagged as belonging to the selected logical partition.

5. The system of claim 1, wherein the writing process generates the data packages of the logical partitions discontiguously in that the writing process writes the data packages to the memory region as the data packages are generated, regardless of the logical partitions to which the data packages belong and, optionally, wherein the data packages as written to and as stored by the memory region are of arbitrary sizes, in correspondence with sizes of the data packages as the writing process generates the data packages.

6. The system of claim 1, wherein the reading process retrieves the data packages of the selected logical partition contiguously in that the reading process reads the data packages belonging to the selected logical partition in a given order, regardless of how the data packages of the selected logical partition are stored within the memory region relative to the data packages of other partitions.

7. The system of claim 1, further comprising:
a private memory for the second hardware node, to which the data packages of the selected logical partition are contiguously written in a given order from the memory region responsive to the reading process retrieving the data packages of the selected logical partition.

8. The system of claim 1, wherein the memory region comprises:
a first instance to which the writing process, as a first writing process, writes the data packages of the logical partitions discontiguously; and
a second instance to which a second writing process writes other data packages of the logical partitions discontiguously and, optionally:
wherein the reading process retrieves the data packages and the other data packages of the selected logical partition contiguously, by reading the data packages and the other data packages belonging to the selected logical partition in a given order, regardless of how the data packages and the other data packages are stored within the first instance and the second instance of the memory region relative to the data packages and the other data packages of other partitions.

9. The system of claim 1, further comprising:
a third hardware node to execute a management process to:
manage discontiguous storage of the data packages to the memory region responsive to the writing process generating the data packages discontiguously, and
manage contiguous conveyance of the data packages of the selected logical partition to the reading process responsive to the reading process reading the data packages of the selected logical partition contiguously.

10. The system of claim 1, wherein the first hardware node and the second hardware node are a same node and, optionally, wherein the writing process and the reading process are a same process.

11. A method comprising:
logically partitioning, by a computing device, a memory region into a plurality of logical partitions;
receiving in temporal order, by the computing device, a plurality of data packages for storage in the memory region, each data package tagged with a logical partition to which the data package belongs; and
as each data package is received, storing, by the computing device:
the data package within an available location within the memory region without regards to the logical partition to which the data package belongs; and
metadata referencing where the data package is stored within the memory region and indicating the logical partition to which the data package belongs,
wherein the data packages of the logical partitions are discontiguously stored within the memory region.

12. The method of claim 11, wherein the computing device:
(i) receives the data packages in the temporal order from a plurality of different writing processes responsible for writing to the logical partitions of the memory region; and/or
(ii) stores the data package within the available location within the memory region by storing a pointer to data of the data package as stored outside of the memory region.

13. A non-transitory computer-readable data storage medium storing program code executable by a computing device:
receive a request for data packages of a selected logical partition of a memory region having a plurality of logical partitions that each have a plurality of data packages, the memory region discontiguously storing the data packages of the logical partitions;
traverse a plurality of metadata of the memory region, each metadata corresponding to a data package, referencing where the data package is stored within the memory region, and indicating the logical partition to which the data package belongs; and
as each metadata is traversed, responsive to determining that the metadata indicates that the data package to which the metadata corresponds belongs to the selected logical partition, convey the data package in partial fulfillment of the request,
wherein the data packages of the selected logical partition are contiguously retrieved from the memory region.

14. The non-transitory computer-readable data storage medium of claim 13, wherein the metadata of the memory region are traversed in a temporal order in which the data packages were stored within the memory region, such that the data packages of the selected logical partition are contiguously retrieved from the memory region in the temporal order in which the data packages were stored within the memory region.

15. The non-transitory computer-readable data storage medium of claim 13, wherein the data packages of the selected logical partition are conveyed in fulfillment of the request by contiguous storage in a given order within a private memory for a reading process from which the request was received.
